# EUROPEAN PATENT APPLICATION

(11) **EP 4 481 991 A1**
(43) Date of publication of application: **25.12.2024**
(21) Application number: 24183477.9
(22) Date of filing: 20.06.2024
(51) Int. Cl.: H02J 50/00, H02J 50/12

(54) **WIRELESS POWER TRANSFER WITH SELECTABLE FREQUENCY**

(30) Priority: 21.06.2023 US 202363522184 P
(71) Applicant: Molex, LLC, Lisle, IL 60532 (US)
(72) Inventor: Nawaz, Bazil, Warrenville (US)
(74) Representative: Ter Meer Steinmeister & Partner

(57) **Abstract**

A circuit (100A) for wireless power transfer includes an inverter (30A) , a filter (40A), and a resonant tank circuit (50A). The inverter (30A) converts direct current into alternating current. Attached to the inverter (30A) is the filter (40A), which includes a first switched reactive component with two modes. Each mode offers distinct frequency responses and phase shift functions, and differing cut-off frequencies. The resonant tank circuit (50A), connected to the filter's output, includes a tank inductor that facilitates the wireless transfer of electrical energy through a magnetic field.

## Description

This patent application claims priority of U.S. Provisional Patent Application Serial Number 63/522,184, filing date June 21, 2023.

### BACKGROUND

The increasing popularity of cellular telephone use has led to an increased interest in convenient recharging. Ordinarily, battery recharging includes establishing a wired connection to a recharging power supply.

Wireless charging, on the other hand, entails device positioning to establish inductive power transfer. Different manufacturers have shown interest in a variety of wireless charging protocols. Compatibility challenges among the various protocols, have frustrated consumer adoption.

### SUMMARY

The present inventors have recognized, among other things, that a problem to be solved can include providing a vehicle platform compatible with a variety of charging protocols. The present subject matter can help provide a solution to this problem, such as by providing a system that allows for a selectable transfer function for a wireless power transfer system.

Thus, it is an object to provide vehicle platform, a circuit or system, which allows for a selectable transfer function for a wireless power transfer system.

The object is solved by the features of the independent claims. Preferred embodiments are in the dependent claims.

One example includes a filter having a selectable transfer function. The selectable transfer function allows selection of a frequency response, selection of a phase response, or selection of both the frequency response and the phase response. The selection can be configured or optimized for multiple operating frequencies depending on, for example, the wireless power standard or power receiver requirement. One example includes a resonant tank circuit having a selectable transfer function. In one example, selecting a frequency response includes selecting a power gain and selecting a system phase response. The selection can be configured or optimized for multiple operating frequencies depending on the wireless power standard or power receiver requirement.

Automotive in-car wireless charging is associated with electromagnetic compatibility, interoperability with different smartphone manufacturers, wireless power standards, and thermal requirements. Examples presented herein can be tailored to satisfy these requirements.

The present subject matter includes embodiments of circuits for wireless power transfer systems. A circuit is configurable via one or more switchable components into multiple different configurations for use at multiple different operating frequencies for the wireless power transfer system.

Each of these non-limiting examples can stand on its own, or can be combined in various permutations or combinations with one or more of the other examples.

According to one aspect a wireless, power supply circuit is provided including an inverter configured to receive a direct current supply and provide an alternating current output; a filter having a filter input coupled to the alternating current output and having a filter output, the filter including a first switched reactive component, wherein the first switched reactive component includes a first switch and a first reactive component, and wherein the first switched reactive component has a first mode and a second mode, and wherein, in the first mode, the filter has a first frequency response and first phase shift function and in the second mode, the filter has a second frequency response and a second phase shift function and wherein a first cut-off frequency of the first frequency response differs from a second cut-off frequency of the second frequency response; and a resonant tank circuit having a tank input coupled to the filter output, the resonant tank circuit including a tank inductor configured to provide a magnetic field to wirelessly transfer electric energy.

In one or more embodiments, the first switched reactive component may include a control node, wherein a control signal on the control node may be configured to select the first mode or select the second mode.

In one or more embodiments, the resonant tank circuit may include a second switched reactive component.

In one or more embodiments, the second switched reactive component may include a second switch and a second reactive component.

In one or more embodiments, the first switched reactive component may include the first switch in parallel with a reactive component.

In one or more embodiments, the first switched reactive component may include the first switch in series with a reactive component.

In one or more embodiments, the filter may include a first inductor, a capacitor network, and a second inductor.

In one or more embodiments, the first inductor, the second inductor, and the capacitor network may be connected in series.

In one or more embodiments, the first switched reactive component may include at least one of the first inductor, the capacitor network, and the second inductor.

In one or more embodiments, the capacitor network may include a first capacitor coupled in parallel with a series connected combination of a second capacitor and a third capacitor.

In one or more embodiments, the second capacitor and the third capacitor may be connected at a reference node, and the reference node is coupled to a ground.

In one or more embodiments, the filter may include a network of passive components.

In one or more embodiments, the filter may include a low pass filter or an operational amplifier.

In one or more embodiments, the circuit may include a DC supply coupled to the inverter.

In one or more embodiments, the DC supply may include a switched mode power supply.

In one or more embodiments, the first switch may include a bipolar junction transistor or a MOSFET device.

In one or more embodiments, the first switch may include a control node.

In one or more embodiments, the control node may be coupled to a processor, or the control node may be user selectable.

In one or more embodiments, the control node may be coupled to a processor and the processor may be configured to execute instructions to selectively configure the first switch.

According to another aspect a method is provided comprising providing an inverter configured to supply an alternating current output; coupling a filter to the alternating current output, the filter including a first switched reactive component, wherein the first switched reactive component includes a first switch and a first reactive component, and wherein the first switched reactive component has a first mode and a second mode, and wherein, in the first mode, the filter has a filter output including a first frequency response and first phase shift function and in the second mode, the filter output includes a second frequency response and a second phase shift function and wherein a first cut-off frequency of the first frequency response differs from a second cut-off frequency of the second frequency response; and coupling a resonant tank circuit to the filter output, the resonant tank circuit including a tank inductor configured to provide a magnetic field to wirelessly transfer electric energy.

In one or more embodiments, coupling the filter to the alternating current output may include arranging a pi-filter network.

In one or more embodiments, coupling the filter may include coupling a processor to the first switched reactive component.

In one or more embodiments, the method may further include configuring the processor to select the first mode or select the second mode.

In one or more embodiments, coupling the resonant tank circuit may include providing a second switched reactive component.

In another aspect, a system is provided comprising a filter having an input and a filter output, the filter including a first switched reactive component, wherein the first switched reactive component includes a first switch and a first reactive component, and wherein the first switched reactive component has a first mode and a second mode, and wherein, in the first mode, the filter has a first frequency response and first phase shift function and in the second mode, the filter has a second frequency response and a second phase shift function and wherein a first cut-off frequency of the first frequency response differs from a second cut-off frequency of the second frequency response, the filter configured to couple with an alternating current supply; a resonant tank circuit having coupled to the filter output, the resonant tank circuit including a tank inductor configured to provide a magnetic field to wirelessly transfer electric energy; and a load having a load inductor electrically coupled to a load impedance, the load inductor configured to provide an alternating current to the load impedance when the load inductor is disposed in the magnetic field.

In one or more embodiments, the load impedance may include a battery charging circuit.

In one or more embodiments, the system may further include a processor coupled to first switched reactive component and wherein the processor is configured to select the first mode and configured to select the second mode.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 includes an illustration of a system, according to one example.
FIG. 2 includes an illustration of a portion of a system, according to one example.
FIGS. 3A and 3B include illustrations of a portion of a circuit, according to some examples.
FIG. 4 includes an illustration of a portion of a circuit, according to one example.
FIG. 5 includes an illustration of a system, according to one example.
FIG. 6 includes an illustration of a flowchart, according to one example.
FIG. 7 includes an illustration of frequency responses, according to some examples.
FIG. 8 includes an illustration of a phase distribution, according to some examples.

### DETAILED DESCRIPTION

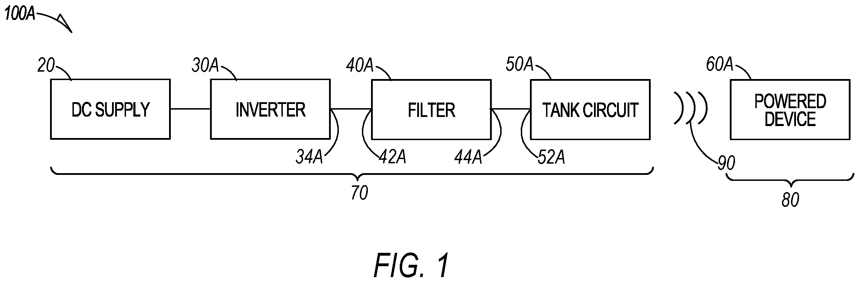

FIG. 1 includes an illustration of system 100A, according to one example. In the figure, system 100A includes part 70 and part 80. Part 70 can be installed in a vehicle or in a facility and part 80 can include a powered device 60A, such as a portable electronic device or handheld device. One example of a powered device 60A can include a cellular telephone.

Part 70, in the example shown, includes DC supply 20, inverter 30A, filter 40A and resonant tank circuit 50A.

DC (direct current) supply 20 can include a vehicle power supply. In one example the vehicle power supply includes a battery having a nominal output of 12 volts DC. The vehicle power supply can include other components as well, including a voltage regulator and an alternator (or generator). In some examples, DC supply 20 can include a solar cell.

Inverter 30A can receive an input including a DC voltage supply. Inverter 30A includes circuitry to provide an output of alternating current at inverter output 34A.

Filter 40A can receive, at filter input 42A, an alternating current from inverter output 34A. Filter 40A can include circuitry that provides a frequency response such as a high pass filter, a low pass filter, a band pass filter, or combinations of such filters. Filter 40A has filter input 42A configured to receive an alternating current input and provide an output at filter output 44A having a frequency response determined by the input signal and the configuration of circuit components.

Filter output 44A is coupled to an input of resonant tank circuit 50A. Resonant tank circuit 50A, sometimes referred to as a tank circuit, is configured to receive the filtered output and provide a power sinusoidal and modulated signal to an output inductor. The varying current in the output inductor induces an associated magnetic field 90.

In one example, powered device 60A includes an inductor coupled to a recharging circuit having a rechargeable battery. The inductor of powered device 60A is configured to receive electric energy via magnetic field 90 produced by the output inductor of resonant tank circuit 50A.

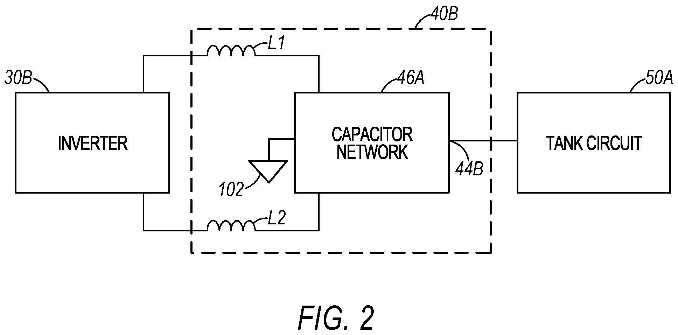

FIG. 2 includes an illustration of a portion of a system, according to one example. The figure illustrates a series connection of inverter 30B, inverter 40B, and resonant tank circuit 50A. Inverter 30B provides an output signal on two lines. Each of the two lines are coupled to filter 40A via series-wired inductor L1 and inductor L2. Inductors L1 and L2 are coupled to capacitor network 46A. Capacitor network 46A is tied to a reference voltage, here denoted as ground 102, and provides an output signal on filter output 44B. Filter output 44B is coupled to resonant tank circuit 50A.

In one example, capacitor network 46A, in cooperation with inductors L1 and L2, provides a transfer function having a particular frequency response and particular phase shift function. Capacitor network 46A can include a circuit of passive and active components, including capacitors, inductors, and resistors. In one example, the reactive components include capacitors and other components arranged as a pi-filter. Other circuit configurations, in addition to a pi-network, are also contemplated, including a band pass filter (BPF), a T-network, an LC network, or other circuit topology. In one example, passive components, such as capacitors, inductors, and resistors are electrically connected, or disconnected, to provide a particular transfer function.

A frequency response can be characterized by a cut-off frequency. The cut-off frequency, sometimes referred to as the corner frequency or the 3-dB frequency, represents a significant attenuation in signal power. The cut-off frequency represents a frequency at which the power is reduced by half that of the passband. In the context of the present subject matter, the cut-off frequency in a first mode of operation differs from the cut-off frequency in a second mode of operation, where the modes are associated with particular switch positions.

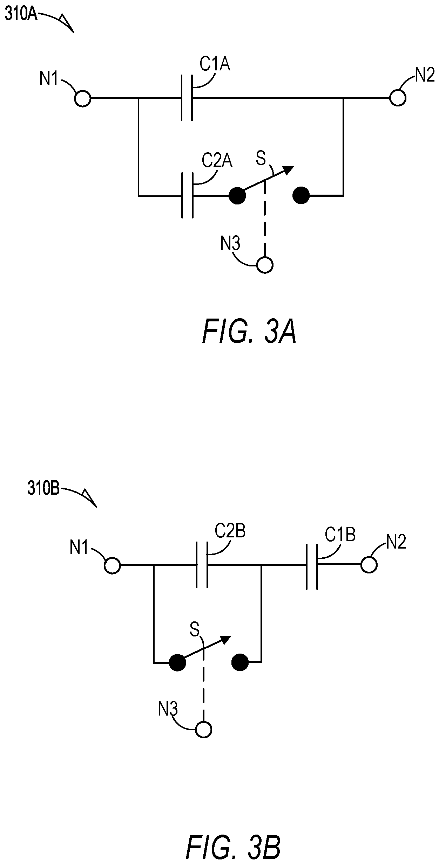

FIGS. 3A and 3B include illustrations of portions of a circuit, such as a filter circuit or a resonant tank circuit, according to some examples. In FIG. 3A, circuit portion 310A includes a parallel arrangement of reactive components C1A and C2A and switch S in series with C2A. In the figure, the reactive components are depicted as capacitors, however, the reactive components can be inductors or resistors. In circuit portion 310A, switch S is depicted in an open position, and thus, no current flows in reactive component C2A. As such, across nodes N1 and N2, the capacitance is determined by C1A. When switch S is closed, the capacitance across nodes N1 and N2 is determined by a combination of reactive component C1A and C2A, which, in this case, is the sum of the individual capacitances.

In FIG. 3B, circuit portion 310B includes a series arrangement of reactive components C1B and C2B and switch S shunts C2B. In the figure, the reactive components are depicted as capacitors, however, the reactive components can be inductors or resistors. In circuit portion 310B, switch S is depicted in an open position, and thus, current flows in reactive components C1B and C2B. As such, across nodes N1 and N2, the capacitance is the inverse of a sum of inverse capacitances. When switch S is closed, reactive component C2B is shorted and thus, the capacitance across nodes N1 and N2 is determined by reactive component C1B.

As used herein, the combination of C1A and C2A (in FIG. 3A) and the combination of C1B and C2B (in FIG. 3B) can be described using the term component and in the sense of this document, the component value can be selected using switch S. That is, with switch S in a first mode, the component (capacitance, inductance, or resistance) has a first value and with switch S in a second mode, the component has a second value.

In both circuit portions 310A and 3 10B, a signal on control node N3 provides control of switch S, and thus determines the capacitance across nodes N1 and N2.

Circuit portions 310A and 310B can be configured in a capacitance network to control a transfer function. Circuit portions 310A and 310B can be implemented, for example, in filter 40A, in resonant tank circuit 50A, or in both filter 40A and in resonant tank circuit 50A, in a manner to control the frequency response and phase shift function.

In some examples, a system can be configured to select from more than two operational modes. For example, a system can be configured to provide three or more different transfer functions. The switch configurations can allow for any number of different operational modes.

Some wireless charging protocols allow for frequency switching depending on the specification, customer, power level, and optimization scheme. For example, Qi MPP protocol operates at approximately 360 kHz and Qi EPP protocol operates between 87 kHz-205 kHz.

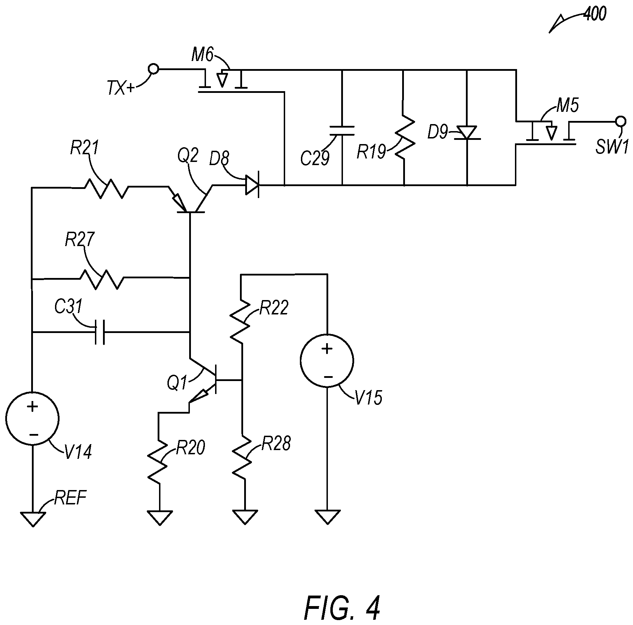

FIG. 4 includes an illustration of circuit portion 400, according to one example. Circuit portion 400 includes a switch architecture suitable for controlling elements of a network in selecting a transfer function. Circuit 400 can be configured to operate as a switch. Biasing power is provided by supply V14 and supply V15. The example illustrated includes a pair of metal oxide field effect transistor (MOSFET) devices, here denoted as M5 and M6. For example, as to MOSFET M5, a drain terminal is coupled to node SW1 and the source terminal and gate are connected in parallel with capacitor C29, resistor R19, and diode D9, and across the source and gate terminals of MOSFET M6. Other configurations of switching architecture are also contemplated. In the example shown, node SW1, coupled to the drain terminal of MOSFET M5, provides an output that can be viewed as a switch node.

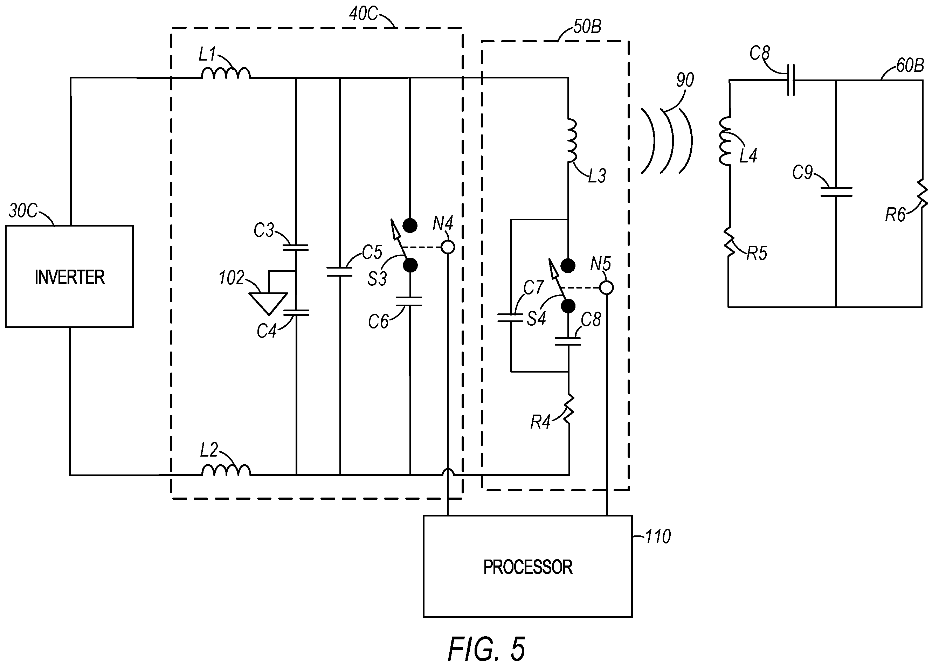

FIG. 5 includes an illustration of a system, according to one example. The figure includes inverter 30C, filter 40C, resonant tank circuit 50B, and powered device 60B.

Filter 40C includes inductors L1 and L2, capacitors C3, C4, and C5 and includes capacitor C6 series coupled to switch S3. Capacitors C3 and C4 are coupled to reference level, here denoted by ground 102. Capacitor C5 is coupled to inductors L1 and L2 and is in parallel with the series combination of C6 and switch S3.

Resonant tank circuit 50B includes inductor L3, sometimes referred to as a tank inductor, and is shown here modeled with equivalent resistor R4 (representing resistive losses). In addition, inductor L3 and resistor R4 are in series with a parallel combination of capacitor C7 and switched capacitor C8. Capacitor C8 is selectively switched in or out of circuit using switch S4.

The illustrated system includes processor 110 coupled to switch S3 and switch S4, at nodes N4 and N5, respectively. Processor 110 can be configured to selectively operate S3 and S4 to configure a transfer function of filter 40C and resonant tank circuit 50B. Processor 110 can be configured to execute instructions to implement an algorithm for selecting a transfer function and conduct handshaking according to a selected protocol.

In one example, the processor is configured to automatically select an operational mode, and thus, implement a particular transfer function, based on detected device characteristics, based on vehicle configuration, based on a detected noise environment, based on signaling requirements associated with a charging session, or other factors or parameters.

In the figure, inductor L3 induces magnetic field 90. Inductor L4, when suitably positioned, engages with magnetic field 90 and can provide a voltage across capacitor C9. Capacitor C8 and resistance R5 represent modeled losses in powered device 60B. Voltage across the parallel combination of capacitor C9 and load resistor R6 can be configured to provide a charging voltage. Resistor R6 can be viewed as the equivalent resistive model of a series-resonant tank circuit. In the context of the present subject matter, inductor L4 (associated with the load) is coupled to a load impedance determined by the combination of capacitor C8, capacitor C9, resistor R5 and load resistance R6.

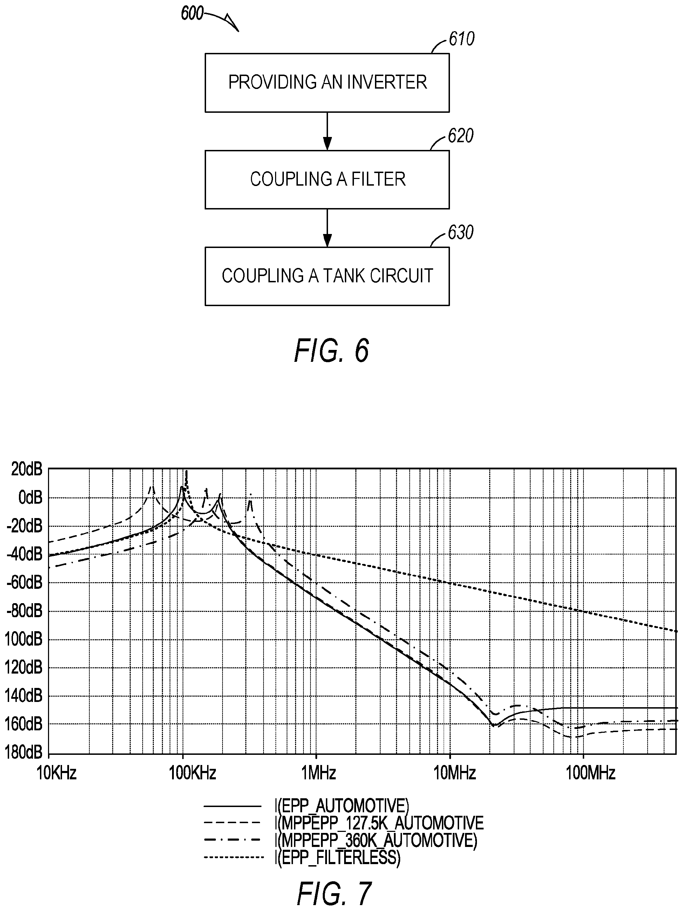

FIG. 6 includes an illustration of flowchart 600 of a method of manufacturing, according to one example.

At 610, method 600 includes providing an inverter. An inverter can be configured to supply an alternating current voltage from a direct current source. The inverter can be provided as a component of equipment in a vehicle manufacturing process. The inverter in an automobile can be connected to, for example, a nominal 12 VDC supply and at an output of the inverter, provide an alternating current output.

At 620, method 600 includes coupling a filter to the output of the inverter. The filter can have one or more reactive components and can be characterized by a transfer function that includes a frequency response and phase response. The frequency response describes an output signal as a function of frequency. The output signal can be expressed, for example, in decibels or voltage. The phase response depicts relationship between voltage and current as a function of frequency.

In one example, the filter includes a switch. The switch can be configured to change electrical properties of a selected component. For example, as illustrated herein, the switch can be associated with a capacitor, an inductor, or a resistor. The switch can be configured to alter the electrical characteristics of the filter circuit, and thus, alter the transfer function. For example, the filter can be configured to have a frequency response exhibiting a peak output at a first frequency with the switch in a first mode and exhibit a peak output at a second frequency (different than the first frequency) with the switch in a second mode (different than the first mode).

At 630, method 600 includes coupling a resonant tank circuit to the filter. The resonant tank circuit can include an inductor configured to radiate a magnetic field near the inductor. The magnetic field can propagate electrical energy suitable for powering or charging a nearby device.

FIG. 7 includes an illustration of frequency responses, according to some examples. In the figure, the abscissa is marked to indicate frequency decades and the ordinate is marked to indicate decibel signal levels. The traces shown correspond to wireless protocols popularly known as Epp automotive, Mppepp-127.5k automotive, Mppepp-360k automotive, and Epp filter-less. Epp automotive refers to Qi Extended Power Profile. Protocol Mppepp-127.5k automotive and Mppepp-360k automotive refers to magnetic power profile (MPP) at 127.5kHz and 360kHz, respectively. Epp filter-less refers to Qi Extended Power Profile implemented without a filter.

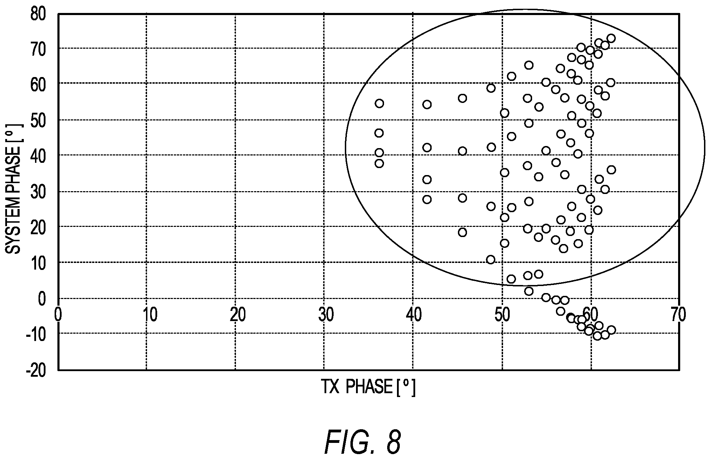

FIG. 8 includes an illustration of a phase distribution, according to some examples. In the figure, transmit phase (abscissa) is approximately 35 to 65 degrees while system phase (ordinate) ranges from approximately -10 to 75 degrees.

In some examples, filter 40A includes an active filter having an operational amplifier. The filter can include an operational amplifier having a reactive component coupled to an input node, coupled in a feedback loop, or configured in other manners suited to a particular application.

In one example, the DC supply includes a switched mode power supply (SMPS).

In various example, a switch includes a MOSFET device or a bipolar junction transistor (BJT).

In various examples, the control node of a switch can be configured for user selection. In one example, the wireless energy transfer protocol provides for handshaking between the charging system and the powered device. The selection of a charging protocol can be user selected or can be automatically selected based on the device characteristics.

Handshaking as to the wireless power transfer function can be managed using a variety of coding protocols. For example, amplitude shift keying (ASK) and frequency shift keying (FSK) can be utilized for bidirectional signaling in conjunction with power transfer.

One communication protocol can be referred to as the Qi standard. The Qi standard allows for switch selection and communication using ASK and FSK between the transmitter (including the resonant tank circuit) and the receiver (including the powered device). One example can be configured to measure parameters and select an operating mode power level, coupling mode, operating frequency, and other parameters.

One example of an operating parameter includes total harmonic distortion. Total harmonic distortion (THD) corresponds to how sinusoidal or EMC compliant a power signal can be. The lower the THD, the better EMC compliant it would be and lower overloading features such as FSK, ASK, heating and so on. In the context of wireless charging, THD corresponds to loading on a charging system. That is, excess THD can lead to overloading of operational parameters of a charging system. Overloading can include excessive heating, voltage fluctuations, and shortened device longevity.

### Selected Aspects

The following section provides a description of various aspects according to the present subject matter:

A first aspect includes a circuit for a wireless power transfer system, the circuit comprising one or more switchable components such that the circuit is configurable into multiple different configurations for use at multiple different operating frequencies for the wireless power transfer system.

A second aspect includes the first aspect and wherein the one or more switchable components comprise one or more switchable inductors, and/or one or more switchable capacitors.

A third aspect includes the first or second aspect and wherein the one or more switchable components enable the circuit to be configurable between the multiple different configurations by changing ON/OFF status of at least one of the one or more switchable components.

A fourth aspect includes the third aspect and wherein the circuit is configurable between the multiple different configurations by activating and/or switching on the at least one of the one or more switchable components that was switched off and/or inactive and deactivating and/or switching off the at least one of the one or more switchable components that was switched on and/or active.

A fifth aspect includes one of the preceding aspects and wherein the one or more switchable components enable the circuit to be configurable into the multiple different configurations for use at multiple different operating frequencies including at least a first operating frequency of about 360 kilohertz (kHz) and a second operating frequency of about 127.5 kHz for the wireless power transfer system.

A sixth aspect includes any one of the preceding aspects and wherein the one or more switchable components enable the circuit to be configurable between a first configuration for a first operating frequency for the wireless power transfer system; and a second configuration for a second operating frequency, different than the first operating frequency, for the wireless power transfer system.

A seventh aspect includes the sixth aspect and wherein the circuit is reconfigurable from the first configuration to the second configuration by changing an on/off state of a first set of switchable components, the first set initially being at an original on/off state, and the circuit is reconfigurable from the second configuration to the first configuration by returning the on/off state of the first set of switchable components to the original on/off state.

An eighth aspect includes the sixth or seventh aspect and wherein the one or more switchable components enable the circuit to be configurable into the first configuration for the first operating frequency of 360 kilohertz (kHz) for the wireless power transfer system, and the second configuration for the second operating frequency between about 87 kHz to 205 kHz for the wireless power transfer system.

A nineth aspect includes the sixth or seventh aspect wherein the one or more switchable components enable the circuit to be configurable into the first configuration for the first operating frequency of 360 kilohertz (kHz) for the wireless power transfer system, and the second configuration for the second operating frequency of 127.5 kHz for the wireless power transfer system.

A tenth aspect includes any one of the sixth to nineth aspect wherein none of the one or more switchable components are switched on and active for the circuit in the first configuration, and all of the one or more switchable components are switched on and active for the circuit in the second configuration.

An eleventh aspect includes any one of aspects six to nine, wherein the one or more switchable components comprise a plurality of switchable components, one or more, but not all, of plurality of switchable components are switched on and active for the circuit in the first configuration, and all of the plurality of switchable components are switched on and active for the circuit in the second configuration.

A twelfth aspect includes any one of aspects seven through eleven and further comprising a second set of switchable components, wherein one or more or all of the switchable components of the first set of switchable components can also be in the second set of switchable components, and wherein the circuit is configurable to switch to a third on/off state associated with the second set of switchable components.

A thirteenth aspect includes any one of the preceding aspects, wherein the circuit includes a filter between an inverter and a resonant tank circuit, and the filter includes at least one of the one or more switchable components.

A fourteenth aspect includes the thirteenth aspect wherein the filter includes a plurality of inductors and a plurality of capacitors, and at least one of the capacitors comprises a switchable capacitor.

A fifteenth aspect includes the fourteenth aspect wherein at least one of the inductors comprises a switchable inductor.

A sixteenth aspect includes any one of aspect thirteenth through fifteenth, wherein the resonant tank circuit includes a first capacitor and a second capacitor in parallel with the first capacitor, and at least one of the first and second capacitors comprises a switchable capacitor.

A seventeenth aspect includes the sixteenth aspect wherein the first and second capacitors of the resonant tank circuit comprise switchable capacitors.

An eighteenth aspect includes any one of aspect thirteenth through aspect sixteenth wherein the filter includes non-switchable inductors L1 and L2, switchable inductors L3 and L4, non-switchable capacitors C2, C4, and C8, and switchable capacitors C5, C9, and C10.

A nineteenth aspect includes the eighteenth aspect wherein the non-switchable inductor L1 is coupled in parallel with the switchable inductor L3, the non-switchable inductor L2 is coupled in parallel with the switchable inductor L4, the non-switchable capacitors C2 and C4 are coupled in series such that a first node is defined between the non-switchable capacitors C2 and C4, the switchable capacitors C9 and C10 are coupled in series such that a second node is defined between the switchable capacitors C9 and C10, the second node is in series with the first node between the non-switchable capacitors C2 and C4, the non-switchable capacitor C8 is coupled in parallel with the switchable capacitor C5, the non-switchable capacitor C4 is coupled in series with the non-switchable inductor L1 and the switchable inductor L3 such that a third node is defined between the non-switchable capacitor C4, the non-switchable inductor L1, and the switchable inductor L3, the non-switchable capacitor C2 is coupled in series with the non-switchable inductor L2, the switchable inductor L4, and the switchable capacitor C9 such that a fourth node is defined between the non-switchable capacitor C2, the non-switchable inductor L2, the switchable inductor L4, and the switchable capacitor C9, the fourth node in series with the non-switchable capacitor C8, and the switchable capacitor C10 is coupled in series with the non-switchable inductor L1 and the switchable inductor L3 such that a fifth node is defined between the switchable capacitor C10, the non-switchable inductor L1, and the switchable inductor L3, the fifth node in series with the non-switchable capacitor C8.

A twentieth aspect includes the eighteenth aspect or the nineteenth aspect wherein the resonant tank circuit includes a non-switchable capacitor C3 and a switchable capacitor C7 in parallel with the non-switchable capacitor C3, and wherein the circuit is configurable into a first configuration for a 360 kHz operating frequency for the wireless power transfer system in which none of the switchable inductors L3 and L4 and switchable capacitors C5, C7, C9, and C10 are switched on and active, and a second configuration for a 127.5 kHz operating frequency for the wireless power transfer system in which all of the switchable inductors L3 and L4 and switchable capacitors C5, C7, C9, and C10 are switched on and active.

A twenty-first aspect includes any one of aspects thirteenth through seventeenth wherein the filter includes switchable inductors L1, L2, L3, and L4, and switchable capacitors C2, C4, C5, C8, C9, and C10.

A twenty-second aspect includes the twenty-first aspect wherein the switchable inductor L1 is coupled in parallel with the switchable inductor L3, the switchable inductor L2 is coupled in parallel with the switchable inductor L4, the switchable capacitors C2 and C4 are coupled in series such that a first node is defined between the switchable capacitors C2 and C4, the switchable capacitors C9 and C10 are coupled in series such that a second node is defined between the switchable capacitors C9 and C10, the second node is in series with the first node between the switchable capacitors C2 and C4, the switchable capacitor C8 is coupled in parallel with the switchable capacitor C5, the switchable capacitor C4 is coupled in series with the switchable inductor L1 and the switchable inductor L3 such that a third node is defined between the switchable capacitor C4, the switchable inductor L1, and the switchable inductor L3, the switchable capacitor C2 is coupled in series with the switchable inductor L2, the switchable inductor L4, and the switchable capacitor C9 such that a fourth node is defined between the switchable capacitor C2, the switchable inductor L2, the switchable inductor L4, and the switchable capacitor C9, the fourth node in series with the switchable capacitor C8, and the switchable capacitor C10 is coupled in series with the switchable inductor L1 and the switchable inductor L3 such that a fifth node is defined between the switchable capacitor C10, the switchable inductor L1, and the switchable inductor L3, the fifth node in series with the switchable capacitor C8.

A twenty-third aspect includes the twenty-first aspect or the twenty-second aspect wherein the resonant tank circuit includes switchable capacitors C3 and C7 in parallel, and wherein the circuit is configurable into a first configuration for a 360 kHz operating frequency for the wireless power transfer system in which the switchable inductors L3 and L4, the switchable capacitors C5, C7, C9, and C10 are inactive and not switched on and the switchable inductors L1 and L2 and the switchable capacitors C2, C3 C4, and C8 are switched on and active, and a second configuration for a 127.5 kHz operating frequency for the wireless power transfer system in which all of the switchable inductors L1, L2, L3, and L4 and switchable capacitors C2, C3, C4, C5, C7, C8, C9, and C10 are switched on and active.

A twenty-fourth aspect includes any one of the thirteenth aspect through the sixteenth aspect, wherein the filter includes non-switchable inductors L1 and L2, non-switchable capacitors C2, C4, and C8, and a switchable capacitor C5.

A twenty-fifth aspect includes the twenty-fourth aspect wherein the non-switchable capacitors C2 and C4 are coupled in series such that a first node is defined between the non-switchable capacitors C2 and C4, the non-switchable capacitor C8 is coupled in parallel with the switchable capacitor C5, the non-switchable capacitor C4 is coupled in series with the non-switchable inductor L1 and the non-switchable capacitor C8 such that a first node is defined between the non-switchable capacitor C4, the non-switchable inductor L1, and the non-switchable capacitor C8, and the non-switchable capacitor C2 is coupled in series with the non-switchable inductor L2 and the non-switchable capacitor C8 such that a third node is defined between the non-switchable capacitor C2, the non-switchable inductor L2, and the non-switchable capacitor C8.

A twenty-sixth aspect includes the twenty-fourth aspect or the twenty-fifth aspect wherein the resonant tank circuit includes a non-switchable capacitor C3 and a switchable capacitor C7 in parallel with the non-switchable capacitor C3, and wherein the circuit is configurable into a first configuration for a 360 kHz operating frequency for the wireless power transfer system in which the switchable capacitors C5 and C7 are inactive and not switched on and a second configuration for a 127.5 kHz operating frequency for the wireless power transfer system in which the switchable capacitors C5 and C7 are switched on and active.

A twenty-seventh aspect includes a wireless power transfer system comprising the circuit of any one of the preceding aspects, an inverter, and a resonant tank circuit transmitter, wherein the inverter is configured to be coupled with and between a power source and the circuit, the circuit is coupled with and between the inverter and the resonant tank circuit transmitter, and the circuit includes or is coupled with a microcontroller.

A twenty-eighth aspect includes a method of enabling a wireless power transfer system to be operable at multiple different operating frequencies, the method comprising selectively configuring a circuit including one or more switchable components into a corresponding one of multiple possible configurations by changing an ON/OFF status of at least one of the one or more switchable components depending on a particular operating frequency for the wireless power transfer system.

A twenty-nineth aspect includes the twenty-eight aspect wherein the one or more switchable components comprise one or more switchable inductors, and/or one or more switchable capacitors.

A thirtieth aspect includes a method of the twenty-eight aspect or the twenty-nineth aspect wherein selectively configuring the circuit includes activating and/or switching on the at least one of the one or more switchable components that was switched off and/or inactive, and/or deactivating and/or switching off the at least one of the one or more switchable components that was switched on and/or active.

A thirty-first aspect includes a method of any one of the twenty-eight aspect through the thirtieth aspect, wherein the method includes selectively configuring the circuit into a first configuration for a first operating frequency, and selectively configuring the circuit into a second configuration different than the first configuration for a second operating frequency different than the first operating frequency.

A thirty-second aspect includes the method of any one of the twenty-eighth aspect through the thirtieth aspect, wherein the method includes selectively configuring the circuit into a first configuration for a first operating frequency of 360 kilohertz (kHz), and, selectively configuring the circuit into a second configuration different than the first configuration for a second operating frequency of 127.5 kHz.

A thirty-third aspect includes the thirty-first aspect or the thirty-third aspect wherein the method includes reconfiguring the circuit from the first configuration to the second configuration by activating and/or switching on at least one of the one or more switchable components that was switched off and/or inactive in the first configuration, and/or reconfiguring the circuit from the second configuration to the first configuration by deactivating and/or switching off the at least one of the one or more switchable components that was switched on and/or active in the second configuration.

A thirty-fourth aspect includes the method of any one of the thirty-first aspect through the thirty-third aspect, wherein none of the one or more switchable components are switched on and active for the circuit in the first configuration, and all of the one or more switchable components are switched on and active for the circuit in the second configuration.

A thirty-fifth aspect includes the method of any one of the thirty-first aspect through the thirty-third aspect, wherein the one or more switchable components comprise a plurality of switchable components, one or more, but not all, of plurality of switchable components are switched on and active for the circuit in the first configuration, and all of the plurality of switchable components are switched on and active for the circuit in the second configuration.

### Various Notes

The above description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

## Claims

1. A wireless, power supply circuit including:
an inverter (30A) configured to receive a direct current supply and provide an alternating current output;
a filter (40A) having a filter input (42A) coupled to the alternating current output (34A) and having a filter output (44A), the filter (40A) including a first switched reactive component, wherein the first switched reactive component includes a first switch (A) and a first reactive component (C2A), and wherein the first switched reactive component (310A) has a first mode and a second mode, and wherein, in the first mode, the filter (40A) has a first frequency response and first phase shift function and in the second mode, the filter (40A) has a second frequency response and a second phase shift function and wherein a first cut-off frequency of the first frequency response differs from a second cut-off frequency of the second frequency response; and
a resonant tank circuit (50A) having a tank input (52A) coupled to the filter output (44A), the resonant tank circuit (50A) including a tank inductor (L3) configured to provide a magnetic field to wirelessly transfer electric energy.

2. The circuit of claim 1, wherein the first switched reactive component (310A) includes a control node (N3) and wherein a control signal on the control node (N3) is configured to select the first mode or select the second mode.

3. The circuit of claim 1 or 2, wherein the resonant tank circuit (50A) includes a second switched reactive component (310B), wherein the second switched reactive component (310B) includes a second switch (S) and a second reactive component (C2B).

4. The circuit of any one claims 1, 2 or 3, wherein the first switched reactive component (310A) includes the first switch (S) in parallel with a reactive component (C2A) or in series with a reactive component.

5. The circuit of any one of the preceding claims, wherein the filter (40A) includes a first inductor (L1), a capacitor network (46A), and a second inductor (L2), wherein the first inductor (L1), the second inductor (L2), and the capacitor network (46A) are connected in series, and further wherein the first switched reactive component (3 10A) includes at least one of the first inductor (L1), the capacitor network (46A), and the second inductor (L2).

6. The circuit of claim 5, wherein the capacitor network (46A) includes a first capacitor coupled in parallel with a series connected combination of a second capacitor and a third capacitor, wherein the second capacitor and the third capacitor are connected at a reference node, and the reference node is coupled to a ground.

7. The circuit of any one of the preceding claims, wherein the filter (40A) includes a network of passive components and/or the filter (40A) includes a low pass filter or an operational amplifier.

8. The circuit of any one of the preceding claims, further including a DC supply (20) coupled to the inverter (30A), wherein the DC supply (20) includes a switched mode power supply.

9. The circuit of any one of the preceding claims, wherein the first switch (S) includes a bipolar junction transistor or a MOSFET device.

10. The circuit of any one of the preceding claims, wherein the first switch (S) includes a control node (N3), preferably the control node (N3) is user selectable and/or the control node (N3) is coupled to a processor, preferably the processor is configured to execute instructions to selectively configure the first switch (S).

11. A method comprising:
providing an inverter (30A) configured to supply an alternating current output;
coupling a filter (40A) to the alternating current output, the filter (40A) including a first switched reactive component, wherein the first switched reactive component includes a first switch (S) and a first reactive component (C2A), and wherein the first switched reactive component has a first mode and a second mode, and wherein, in the first mode, the filter (40A) has a filter output including a first frequency response and first phase shift function and in the second mode, the filter output includes a second frequency response and a second phase shift function and wherein a first cut-off frequency of the first frequency response differs from a second cut-off frequency of the second frequency response; and
coupling a resonant tank circuit (50A) to the filter output, the resonant tank circuit (50A) including a tank inductor (L3) configured to provide a magnetic field to wirelessly transfer electric energy.

12. The method of claim 11, wherein coupling the filter (40A) to the alternating current output includes arranging a pi-filter network and/or coupling the filter (40A) includes coupling a processor to the first switched reactive component, preferably the processor selects the first mode or the second mode.

13. The method of claim 11 or 12, wherein coupling the resonant tank circuit (50A) includes providing a second switched reactive component.

14. A system (100A) comprising:
a filter (40A) having an input and a filter output, the filter including a first switched reactive component, wherein the first switched reactive component includes a first switch and a first reactive component, and wherein the first switched reactive component has a first mode and a second mode, and wherein, in the first mode, the filter has a first frequency response and first phase shift function and in the second mode, the filter has a second frequency response and a second phase shift function and wherein a first cut-off frequency of the first frequency response differs from a second cut-off frequency of the second frequency response, the filter configured to couple with an alternating current supply;
a resonant tank circuit (50A) having coupled to the filter output, the resonant tank circuit including a tank inductor configured to provide a magnetic field to wirelessly transfer electric energy; and
a load having a load inductor electrically coupled to a load impedance, the load inductor configured to provide an alternating current to the load impedance when the load inductor is disposed in the magnetic field, preferably the load impedance includes a battery charging circuit.

15. The system of claim 14 further including a processor coupled to first switched reactive component and wherein the processor is configured to select the first mode and configured to select the second mode.
